(19) Europäisches Patentamt
European Patent Office
Office européen des brevets

(11) EP 0 649 867 B1

(12) **EUROPEAN PATENT SPECIFICATION**

(45) Date of publication and mention of the grant of the patent:
**17.10.2001 Bulletin 2001/42**

(51) Int Cl.7: **C08J 3/03**
// C08L63/00, C08L67/08

(21) Application number: **93308521.9**

(22) Date of filing: **13.12.1993**

(54) **Stable oil in water emulsions and a process for preparing same**

Stabile Öl-in-Wasser Emulsionen und Verfahren zu deren Herstellung

Emulsions huile dans l'eau stables et leur procédé de préparation

(84) Designated Contracting States:
**DE FR GB NL**

(43) Date of publication of application:
**26.04.1995 Bulletin 1995/17**

(73) Proprietor: **UNILEVER PLC
London EC4P 4BQ (GB)**

(72) Inventor: **Akay, Galip
Sidmouth EX10 8SU (GB)**

(74) Representative:
**Hagemann, Heinrich, Dr.rer.nat., Dipl.-Chem. et al
Patentanwälte
Hagemann, Braun & Held,
Postfach 86 03 29
81630 München (DE)**

(56) References cited:
**EP-A- 0 162 591** **EP-A- 0 463 431**
**DE-A- 2 106 320** **US-A- 4 184 376**

- **DATABASE WPI Derwent Publications Ltd., London, GB; AN 91-242330[33] & JP-A-3 157 445 (KANEBO NSC KK.) 5 July 1991**
- **AKAY, G.: "Flow induced phase inversion in the intensive processing of concentrated emulsions", CHEMICAL ENIGINEERING & SCIENCE, , 1997, vol. 53, no. 2, pages 203 to 223**
- **AKAY, G., KAZEEM, A., AND CHEN, C.H., "Polymer latex preparation by flow induced phase inversion emulsification", 3rd World Congress on Particle Technology, July 1998**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 649 867 B1

Printed by Jouve, 75001 PARIS (FR)

## Description

## Field of the Invention

This invention relates to stable, viscous oil in water emulsions and a process of preparing same that involves the flow induced phase inversion of a water in oil emulsion comprising a nonionic surfactant, a cationic or anionic surfactant, and a viscous oil.

## Background of the Invention

An emulsion is a mixture of two or more immiscible liquids, one being present in the other in the form of droplets. The liquid contained in the droplets is called the internal, discontinuous or dispersed phase while the liquid surrounding the droplets is called the external or continuous phase.

Emulsions usually comprise water dispersed in oil (ie a w/o emulsion) or oil dispersed in water (ie a o/w emulsion). Both are inherently unstable and tend to cream (ie settle) or coalesce unless a suitable emulsifier or emulsifying agent is added to the emulsion to prevent this.

The choice of emulsifier to stabilise a particular emulsion is critical. The ionic nature, chemical type, the amount used, and the hydrophile-lipophile balance of the emulsifier must all be carefully considered.

The hydrophile-lipophile balance or HLB is a number that represents the relative simultaneous attraction of an emulsifier for water and oil. It ranges from about 1 to about 40 depending on the chemical composition and the extent of ionisation of a given emulsifier. For example, pure propylene glycol monostearate has a low HLB (ie strongly lipophilic); a polyoxyethylene monostearate ($H(OC_2H_4)_nOOC(CH_2)_{16}CH_3$) having a long polyoxyethylene chain has a high HLB (ie hydrophillic); and sodium stearate ($CH_3(CH_2)_{16}COONa$) has a very high HLB (ie strongly hydrophillic), because it ionises and thus provides an even stronger hydrophillic tendency.

The viscosity or thickness of an emulsion is determined by the characteristics of the external phase, which includes any additives, the volume ratio of the two phases, particle size and particle size distribution. The viscosity can be increased by adding thickeners or gelling agents that are compatible with the emulsifier, raising the proportion of the internal phase, reducing the particle size or clumping of existing particles or incorporating fine air particles as a third phase.

In general, the larger the size of the droplets that comprise the internal phase, the more readily the emulsion will tend to coalesce. Therefore it is desirable for the globules or particles to be as small as practical. If the particle size distribution is broad, the physical stability of the emulsion is reduced. The particle size and particle size distribution of the internal phase of the emulsion are related to the method of preparation, the energy input, the viscosity difference between the phases, and the type and amount of emulsifying agent used. It can be decreased however by vigorous agitation, choosing liquids that have a smaller viscosity differences, and adding more of the appropriate emulsifier.

Emulsions containing fine particles can be produced by a process of phase inversion. That is, when one of two immiscible liquids is added to the other there comes a point at which a certain ratio of the two liquids is obtained and the external phase becomes the internal phase. In this way a w/o emulsion becomes an o/w emulsion or vice versa. The phase volume ratio at the point of inversion is equal to the square root of the ratio of the viscosities of the two components. The presence of an emulsifier can alter the point of inversion to an extent determined by the concentration of the emulsifier, its chemical nature, and its HLB.

The purpose of emulsion polymerisation is to produce solid polymer particles with a prescribed particle size and particle size distribution. However, the direct emulsification of thermoplastic polymers involves a number of technical difficulties that arise out of the high viscosity and high melting temperature of the polymeric material. For example, high temperatures and pressures are required to emulsify polymers and mixing operations are more complicated. This means special equipment must be used. Furthermore, it is particularly difficult to emulsify a highly viscous liquid in a much less viscous liquid. And while that can be achieved by using extensional flow fields, they are difficult to generate and sustain.

Currently available techniques for the processing of dispersions are only applicable to low viscosity and low dispersed phase volume emulsions. The effectiveness of the emulsification process often relies on the generation of turbulence. It is known (for example in H.P.Grace, Chemical Engineering Communications, 14, 225 (1982); P. Walstra, in Encyclopedia of Emulsion Technology, Vol.1, Ch.2, Ed: P. Bacher, Marcel Dekker, New York, 1983, and J.M. Rallison, Annual Review of Fluid Mechanics, 16, 45 (1984)) that in dilute dispersions, dispersed phase with size (a) undergoes further break-up if the Capillary number (Ca) is greater than unity.

The Capillary number (Ca) of a dispersion can be calculated as follows:

$$Ca = ae\mu_c/\lambda$$

wherein (e) is the rate of deformation, ($\mu_c$) is the continuous phase viscosity and ($\lambda$) is the interfacial tension.

It follows from this that the stress ($\tau=\mu_C e$) has to be large and/or the interfacial tension ($\lambda$) has to be low in order to achieve break-up. The critical Capillary number at break-up also depends on the viscosity ratio of the dispersed and continuous phases ($\mu_D/\mu_C$) and the type of deformation (i.e. shear or extensional flows or their combination). When the viscosity ratio exceeds 3, shear flows can not cause break-up but extensional flows can.

The present inventor maintains that the dispersed phase break-up should be related not to the stress, but to stress power (i.e., energy density, or mechanical energy input per unit volume), which is defined by the inventor in Polymer Engineering and Science, Vol. 22, pp.798-804 1982 and Vol.33, 1993 by the expression:

$$G = [\text{stress}]\ [\text{rate of deformation}]$$

It is evident from this that the droplet will break-up when the stress power exceeds the energy absorption capacity of the droplet (ie $W/at_r$). That is when

$$G > W/at_r$$

wherein (W) is the work of adhesion between the phases and ($t_r$) is the relaxation time. The work of adhesion is related to the interfacial tensions of the phases and the relaxation time is a measure of droplet strength.

By conducting experiments involving the above break-up condition the inventor has found that not only the stress is important, the rate at which such stresses are developed is also critical. It also indicates that the extensional flows are more effective in droplet break-up than shear flows since the stresses developed in extensional flows are greater than the stresses in shear flows. If the viscosity of the dispersion is high and high rates of deformation can be sustained, break-up of small particles will be achieved. In order to achieve these conditions, it is necessary to use high concentration of the dispersed phase. Furthermore, emulsification of highly viscous materials is therefore possible. However, in order to be able to mix highly viscous materials with water and achieve emulsification, it is necessary to use extensional flows which can be achieved at the entrance and exit of capillaries. The fluid can be subjected to repeated capillary entry/exit flow (or expansion/contraction flow) while allowing the emerging fluid to relax in between each stage. This is the basis of the Multiple Expansion Construction Static Mixer (MECSM) used in the present experiments and described in this specification.

In MECSM parallel superimposition of the extensional and shear flows is present. The maximum shear and extensional rates are given by;

$$S_m = 32\ Q/\pi D$$

$$E_m = (1/2)\ S_m \sin(\Phi/2)$$

where (Q) is the volumetric flow rate, (D) is the capillary diameter, ($\Phi$) is the capillary entry or exit angle.

The orthogonal superimposition of shear flows on extensional flows can result in more effective droplet break-up. The orthogonal superimposition of extensional and shear flows can be achieved by forcing the fluid through short and narrow annular gaps between two cylinders while rotating one of the cylinders. This action can be repeated several times while providing mixing at the entrance and exit between each annular slit which is equivalent to a capillary in MECSM. Such a device can be considered as the dynamic version of MECSM.

Another important aspect of the invention is the use of flow induced phase inversion. Phase inversion of an emulsion (A-in-B, which is represented as A/B) takes place when the concentration of the phase-A exceeds a certain value or the temperature is changed or when the HLB of the system is altered. The resulting emulsion is hence B/A. It is also discovered that the phase inversion can also be achieved by subjecting A/B emulsion to deformation thus initially yielding (A/B)/A type of multiple emulsion which when subjected to more deformation is completely inverted to B/A emulsion. This transition still involves the break-up of the multiple emulsion droplets. However, in this case, the multiple emulsion droplets are weak (relaxation time is large) as a result of the presence of very small particles of phase-A within the phase-B.

To a certain extent, the viscosity of water which constitutes the continuous phase in the final emulsion can be increased by in-situ formation of charged spherical lamellar particles (vesicles or liposomes) by using an ionic surfactant in the oil phase. These vesicles are very small (50 nm) and they stabilise the final emulsion by charge repulsion.

The present inventor has now developed a method of directly emulsifying polymers and other highly viscous materials that overcomes the difficulties inherent in the known methods previously discussed. The key feature being the composition of the oil phase of a water in oil emulsion which is subjected to flow induced phase inversion to give a stable oil in water emulsion.

## Objects of the Invention

It is an object of the present invention to provide a stable, concentrated and highly viscous oil in water emulsion.
It is another object of the present invention to provide a process for preparing a stable, concentrated and highly viscous oil in water emulsion by the flow induced inversion of a carefully formulated water in oil emulsion that overcomes at least some of the technical difficulties inherent in the known processes or at least provides a useful alternative to them.

## Definition of the Invention

According to the present invention there is provided a stable oil in water emulsion containing:

a) a first surfactant comprising a nonionic surfactant having a HLB from 6 to 16,
b) a second surfactant comprising a cationic surfactant selected from dicocodimethyl ammonium chloride and hydrogenated ditallowdimethyl ammonium chloride, or the anionic surfactant sodium dioctyl sulphosuccinate, and
c) a viscous oil selected from epoxide polymers and alkyd resins.

Preferably the first surfactant is an ethoxylated alcohol such as Dobanol 23-2, Dobanol 91-2.5 and Dobanol 91-5, or an ester such as Cithrol 2ML, Cithrol 2DL and Cithrol 10ML.
The second surfactant is a cationic surfactant such as dicocodimethyl ammonium chloride and hydrogenated ditallowdimethyl ammonium chloride, or an anionic surfactant such as sodium dioctyl sulphosuccinate.
Preferably the viscosity of the oil is at least $10^2$ mPa s (cP), more prefarbly between $10^2$ mPa s (cP) and $10^4$ mPa s (cP), or more preferably between $10^2$ mPa s (cP) and $10^5$ mPa s (cP).
The oil is an epoxide polymer or resin thereof such as Epikote 816 and Epikote 828, or an alkyd or resin thereof such as Ennelkyd-652 or Ennelkyd-604.
Preferably the concentration of the dispersed phase volume is between 50% and 72%.
Preferably the average particle size of the oil droplets is less than 1 micron, especially between 0.5 and 1 μm (micron), while the particle size span is less than 4, especially less than 2, or more especially 1.
Therefore, according to the invention there is also provided a process for preparing a stable, concentrated and highly viscous oil in water emulsion comprising preparing a water in oil emulsion comprising a nonionic surfactant having a HLB from 6 to 16, a cationic surfactant selected from dicocodimethyl ammonium chloride and hydrogenated ditallowdimethyl ammonium chloride, or the anionic surfactant sodium dioctyl sulphosuccinate, and a viscous oil selected from epoxide polymers and alkyd resins, and subjecting the water in oil emulsion to repeated extensional deformation so as to cause the water in oil emulsion to invert and thus become an oil in water emulsion. This can be achieved using an expansion-contraction static mixer.
The technique is most useful when the viscosity of the oil phase of said oil in water emulsion is greater than $10^2$ mPa s (cP), or even greater reaching to $10^5$ mPa s (cP), the average particle size of the oil droplets is less than 1 μm (micron) with a narrow particle size distribution (ie span is less than 2 or 1) and the concentration of the dispersed phase volume is 50-72%.
Preferably the water is added to a mixing vessel that contains the nonionic surfactant, the cationic or anionic surfactant, and viscous oil, and the resulting w/o emulsion is delivered to a multiple expansion contraction static mixer to induce a phase inversion. The resulting w/o emulsion passes through a low extensional deformation in the form of a flow divider device prior to being delivered into said static mixer, to undergo a high extensional deformation rate.
Preferably a viscosity modifier such as an electrolyte or a hydrophobically modified water soluble polymer is added to the o/w emulsion. When the viscosity modifier is an electrolyte its concentration should be less than 0.1% (for NaCl) but when the viscosity modifier is a hydrophobically modified water soluble polymer, the ratio of that to the second surfactant is not greater than 1:4. For sodium chloride (electrolyte) the molar concentration ratio of the salt to ionic surfactant should be less than 2 in order to obtain a stable emulsion.
Preferably the emulsion droplet size and the size distribution of the emulsion droplets is minimised by superimposing an external energy field, such as an ultrasound field, on the existing extensional deformation.

## Description of the Invention

The invention will now be described in detail with reference to the following schematic drawings that accompany this specification.

Figure 1 shows the experimental set-up and thus an overview of the method of the invention.

Figure 2 is a transverse sectional view of a multiple expansion-contraction static mixer (herein a MECSM) that is described in European Patent specification 382,464, the disclosure of both of which is incorporated herein by way of reference.

Figure 3 shows various forms of flow modifiers such as capillaries (a and b), flow dividers (c and d) and a spacer ring (e) which are important components of the MECSM referred to above.

Figure 4 is a diagrammatic representation of a proposed mechanism of flow induced phase inversion and subsequent homogenisation.

The process of the present invention can in broad terms be said to comprise two steps:

1) preparing a w/o emulsion containing:

   a) a first surfactant comprising a nonionic surfactant,
   b) a second surfactant comprising a cationic or anionic surfactant, and
   c) a viscous oil; and

2) subjecting that to a flow induced phase inversion to give a stable, concentrated and highly viscous o/w emulsion.

Such an o/w emulsion can be prepared using the equipment shown in Figure 1 however they are illustrated and described for the purpose of providing a complete disclosure of the invention and is in no way intended to limit the scope of the monopoly sought which is defined in the accompanying claims.

It should be noted that some viscous oils, notably epoxide polymers and resins thereof, can be hazardous to humans if not handled carefully so appropriate precautions such as providing adequate ventilation and safety equipment must be taken.

Each of steps of the process will now be described in detail.

## Step one : Preparation of a water in oil emulsion

The oil phase of a proposed water in oil emulsion is prepared at a temperature of from 40°C to 60°C from a mixture of a nonionic surfactant, a cationic or anionic surfactant, and a viscous oil.

## Surfactants

A number of nonionic, cationic and anionic surfactants can be mixed with viscous oils such as epoxide polymers or alkyds or ennelkyds to form a non-ionic/ionic/epoxide resin (or ennelkyd) tertiary blend to prepare the water in oil emulsions of the invention. Some suitable surfactants and their properties are summarised below:

## Nonionic surfactants

Preferred nonionic surfactants of the invention include ethoxylated alcohols and esters. The HLB of these should be from 6 to 16, or preferably from 8 to 10, to enable phase inversion.

Ethoxylated alcohols : These non-ionic primary alcohol ethoxylates have the general structure of

$$R—(CH_2CH_2O)_n—H$$

These can be obtained from Shell Chemicals (Dobanol Series) and some of their commercial names and properties are given in Table 1 below. In these surfactants, the HLB increases with increasing ethoxylate (EO) content.

Table 1

| Ethoxylated alcohols | | | | |
|---|---|---|---|---|
| Name | Melting Range 0°C | HLB | %m EO | Hydroxyl no mg KOH/g |
| Dobanol 23-2 | 4-5 | 6.2 | 31.2 | 199 |
| Dobanol 91-2.5 | -20 to -22 | 8.1 | 40.7 | 208 |
| Dobanol 91-5 | 3-6 | 11.6 | 57.9 | 148 |

Ethoxylated esters : These non-ionic surfactants are supplied by Croda Chemicals (Cithrol Series). They are produced by the condensation reaction of ethylene oxide and fatty acid and have the following generic formula:

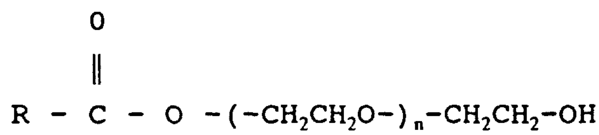

Diesters with the generic formula given below are useful for lowering the HLB of an emulsion:

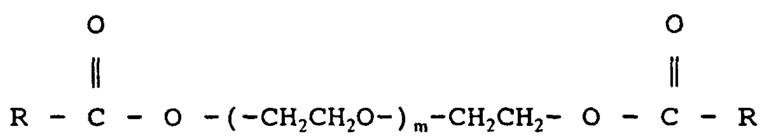

Properties of various ethoxylated mono and diesters that have been found to be particularly suitable for the purposes of the present invention are given in Table 2 below.

Table 2

| Cithrol ethoxylated mono and diesters | | |
|---|---|---|
| Name | HLB | Melting Point (°C) |
| Cithrol 2ML | 8.8 | 5 |
| Cithrol 2DL | 5.9 | 9 |
| Cithrol 10ML | 15.8 | 31 |

**Cationic surfactants**

Preferred cationic surfactants of the invention include quaternary ammonium salts such as those supplied by AKZO (Arquad series). The generic formula of these surfactants is:

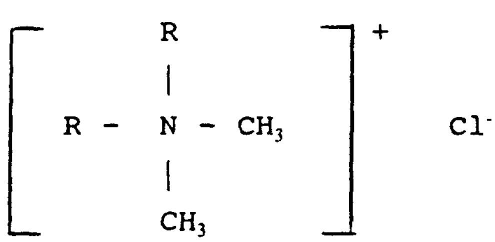

The properties of some of these surfactants are listed in Table 3 below:

Table 3

| Quaternary ammonium salts | | |
|---|---|---|
| Name | Chemical Name | HLB |
| Arquad 2C-75 | Dicocodimethyl ammonium chloride | 11.4 |
| Arquad 2HT-75 | Hydrogenated ditallowdimethyl ammonium chloride | 9.7 |

**Anionic surfactants**

Preferred anionic surfactants of the invention include sodium dioctyl sulphosuccinate which has the formula:

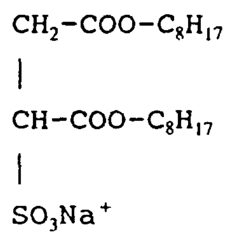

This surfactant can be obtained from American Cyanamid under the trade name AEROSOL OT. Its melting point is 153-157°C and its critical micelle concentration (CMC) is 0.07 g/100 ml.

In general, the required property of the ionic surfactant is that they should form vesicles (liposomes) over a wide surfactant concentration range.

**Epoxide polymers**

Preferred epoxide polymers of the invention are epoxide resins such as Epikote 816 and Epikote 828 (available from Shell Chemical Company). Epikote 816 is particularly preferred and consists of a modified bisphenol-A and epichlorohydrin epoxide resin obtained from:

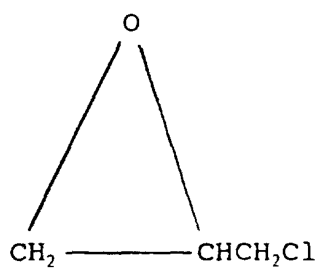

and

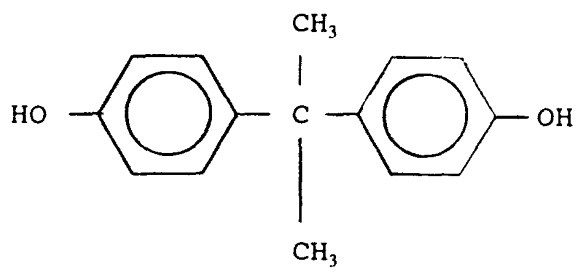

Epichlorohydrin

Bisphenol A

with the general structure as shown below:

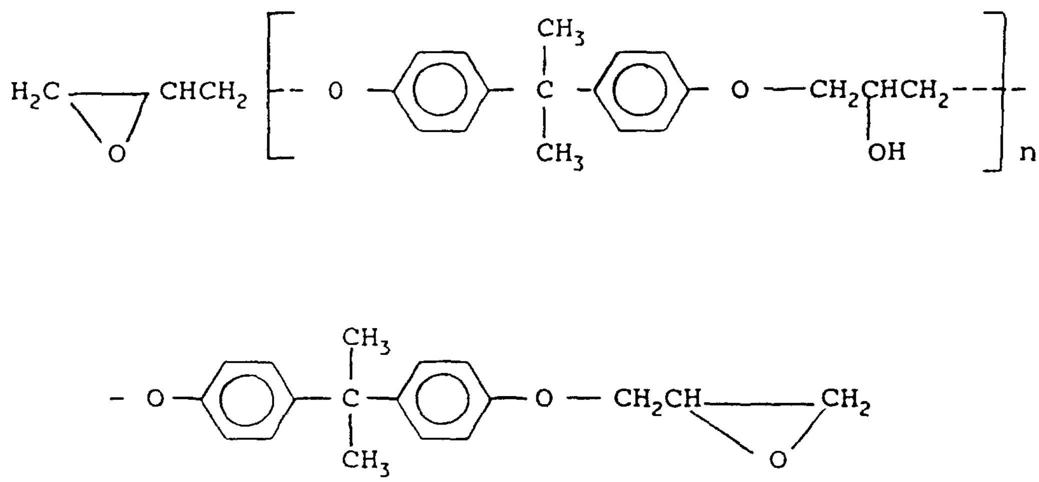

Its physico-chemical properties are as follows:

| | |
|---|---|
| Epoxy group content | 4650-5130 mmol/kg |
| Viscosity (Newtonian at 25°C) | 2.0 Pa-s |
| Density at 25°C | 1.13 g/cc |

## Ennelkyds

Ennelkyds are vegetable oils esterified with an alcohol (pentaerythritol) and comprise the oil phase of letter press printing inks and various paints. The preferred ennelkyd of the invention is Ennelkyd-652 (available from Leon Frenkel Ltd, Kent, England). The base vegetable oil of Ennelkyd-652 is soya bean and its viscosity at 25°C is 70 Pa. s (ie 7 x $10^4$ cP).

## Experimental Technique

Referring again to Figure 1, the oil phase of the proposed water in oil emulsion (containing the epoxide or ennelkyd, nonionic surfactant and cationic or anionic surfactant) is charged into a mixing vessel (C). The mixing vessel is preferably jacketed so it can be maintained at a substantially constant temperature, preferably 60°C, by suitable means such as another water bath (D). The preferred form of mixing vessel (C) of the invention has a single baffle and is fitted with a shaft that supports three flat paddles and whose rotation is controlled by a variable speed drive (E). The conductivity of the contents of the mixing vessel can be measured using a conductivity probe (E1) and suitable additional means can be provided to measure the torque on the impellers. Any phase inversion from a water-in-oil to oil-in-water emulsion as a result of addition of water or changing temperature can be detected by sudden changes in torque or in conductivity.

Water (optionally containing an electrolyte) stored in a thermostatically controlled water bath (A) is delivered by suitable means such as a peristaltic pump (B) (at a rate of about 10 cc/min for example) into the mixing vessel (C). The contents of the mixing vessel should be stirred continuously. When all of the aqueous phase has been added, mixing is continued for another five minutes or so and then the water in oil emulsion thus formed is transferred to the reservoir (F) of a high extension rate mixer device such as a MECSM. This device is also kept at the processing temperature and pumps the emulsion at a constant flow rate irrespective of pressure into the multiple-expansion-contraction static mixer (F1) to homogenise the water-in-oil emulsion in the first instance and cause phase inversion and droplet size reduction in the subsequent stages.

## Step two : Flow induced phase inversion

The phase of an emulsion can generally be inverted by a variety of art-known methods such as adding a high HLB surfactant that is dissolved or dispersed in water, changing the temperature or subjecting the emulsion to deformation. The process of the invention involves the last option. Specifically, phase inversion is brought about substantially isothermally by subjecting the w/o emulsion to a combined extensional and shear formation by appropriate means such as a multiple expansion contraction static mixer (MECSM).

The internal structure of a MECSM is diagrammatically represented in Figure 2. In this trans-sectional view the w/o emulsion enters the MECSM from the left of the diagram, is forced through a first flow modifier (H1) then forced through a very narrow capillary (L). Typically the capillary diameter D is from 0.5 - 1 mm and the capillary length L less than 2 mm.

This process is repeated a number of times by using additional flow dividers and capillaries in series. The preferred number of mixing units (capillaries) is 3-6. The emulsion emerging from the first capillary passes through the second flow divider (H2) and if the rate of extension is sufficiently high, the emulsion is inverted. Otherwise, MECSM will reduce the size (and its distribution) of the water droplets in the W/O emulsion. The basic elements of the MECSM are illustrated in Figure 3.

The number of mixer units and the flow rate through the mixer is usually kept constant throughout the inversion process. Provided that the flow rate is sufficiently high, passage through the static mixer results in phase inversion.

If the rate of deformation is low (as in the batch mixer used in the preparation of the W/O emulsion) then the phase inversion can only be achieved by increasing the water phase volume or increasing the HLB and/or temperature of the system. During passage through the mixer (MECSM) at low deformation rates, W/O emulsion is homogenised (i.e., size of the water droplets and the size span are reduced). If the rate of deformation in the mixer is sufficiently high, then phase inversion takes place, first forming a (W/O)/W multiple emulsion and in the subsequent stages the multiple emulsion is converted to O/W emulsion.

The time at which inversion has occurred is evident from a sudden jump in the conductivity of the emulsion because the conductivity of w/o emulsions is very low (for example about 0.5 μS/cm) but the conductivity of o/w emulsions can be several orders of magnitude greater (for example about 500 μS/cm). The average particle oil droplet size can be further reduced and the spread of the droplet size distribution can be narrowed by passing the emulsion through the static mixer for a second, third or even fourth time.

If one was to identify the crux of the invention it would be that the composition of the w/o emulsion is such that oil globules called liposomes (or vesicles) form as the ionic surfactants diffuse from the oil phase into the aqueous phase increasing the viscosity of that aqueous phase which then allows the oil phase to disperse into the water during phase inversion and stabilise the oil droplets in the o/w emulsion by charge repulsion.

The critical micellar concentration (CMC) of the ionic surfactants should therefore be sufficiently low and agitation should be sufficiently gentle so as to encourage the viscosity of the aqueous phase to increase. The continuous mixing during the w/o emulsification stage ensures that the liposomes do not grow in size since they are confined to the interiors of the water droplets.

As a third but optional step, the viscosity of the o/w emulsion can be decreased by any art-known means such as adding an electrolyte and/or hydrophobically modified water soluble polymer. Accordingly , the emulsion from the MECSM can be feed into a stirred vessel (G) as shown in Figure 1 into which a concentrated electrolyte (or hydrophobically modified water soluble polymer) solution is delivered. It should be noted however that the viscosity modifiers must be added to the emulsion gradually and in a continuous manner because a local increase in electrolyte concentration locally can result in flocculation and coalescence.

A proposed mechanism of flow induced phase inversion and subsequent homogenisation will now be described.

## Flow induced phase inversion at the microscopic level

The present inventor has found that in concentrated emulsions, dispersed phase droplets form cylindrical threads (rods) in capillary flow and orient with their long axes along the flow direction. When the emulsion is decelerated by a sudden expansion (such as that experienced in a MECSM), these rod-like deformable droplets are transformed into disc-like structures immediately, thus increasing their surface area/volume ratio dramatically. These disc-like structures orient themselves with their short axes along the direction of flow. If the rod-like structures were to be solid (i.e. say glass fibre suspensions) clearly, no rod-to-disc transformation can take place, but, nevertheless, rods orient themselves with their short axes along the flow direction, i.e. 90° change in their main orientation direction. This behaviour is common in fluids with orientable rigid microstructure including liquid crystals and liquid crystalline polymers, and it can be predicted theoretically (see F. M. Leslie, J. Fluid Mech., 18, 595 (1964); G. Akay and F. M. Leslie, Proc. 9th Int. Congress on Rheology, 3, 495 (1984)).; and G. Akay, Encyclopedia of Fluid Mechanics, Vol 35, Chapter 35, pp 115-1204, Ed: N. P. Cheremisinoff, Gulf Publishing Co. , Houston, 1985.

During phase inversion in emulsions, there is a marked change in the curvature of the dispersed and continuous phases, i.e. a concave-to-convex curvature transformation. In the case of flow induced phase transformation, curvature change is "catalysed" by the flow by making the oil-water interface flat when rod-like dispersed phase droplets

are transformed into disc-like droplets.

The initial w/O emulsion is unstable and tends to separate out within days. However, the final O/W emulsion is stable (more than 18 months). This indicates that the free energy of the W/O emulsion is higher than the inverted O/W emulsion. However, the inversion process requires an activation energy which is provided by the mechanical energy input during the rod-to-disc transformation when there is a large change in the curvature of the droplets.

These phenomena can be exploited to induce phase inversion during periodic extensional flows. The time and spatial course of events leading to phase inversion and subsequent homogenisation in concentrated emulsions are shown in Figure 4. The various stages (I-IX) are described below:

Stage I : A water-in-oil emulsion is formed. The aqueous phase contains liposomes formed by the diffusion of the ionic surfactant into water droplets dispersed in the oil phase. The dispersed phase (water) droplets are coarse but small (sub-micron) water droplets also are present.

Stage II : The emulsion is accelerated into the capillary of the MECSM where water droplets (especially the larger droplets) extend and orientate in the capillary.

Stage III : The fluid is decelerated which causes the transformation of water threads into hemispherical shells and discs. The viscosity of the fluid increases as these structures orient with their short axes along the streamlines. The oil-water interface becomes flatter, and these discs and shells leave the immediate expansion zone.

This stage is the most important part of the emulsification process. Any form of energy input at this deceleration stage can be useful to enhance phase inversion. The additional energy at the expansion stage can be achieved by impinging the emerging fluid stream on a rotating disk or by focusing ultra-sound waves on the decelating fluid. This process is illustrated in Figure 5 and the results of an experiment involving the use of ultra-sound given are reported and discussed in Example 11.

Stage IV : The discs begin to aggregate and the oil phase is gradually encapsulated by the disc-like water phase. Since the oil phase contains a number of very small spherical water droplets, the newly encapsulated oil phase will contain these droplets which may play an important role in completing the shell round the oil drops and cause oil phase droplets to break-up in the subsequent stages.

Stage V : The phase inversion is to a large extent complete. Oil droplets recover their shape and become spherical and will have small water droplets entrapped in them. Emulsion conductivity is high due to phase inversion.

Stage VI : A second extension/orientation/relaxation stage begins.

Stage VII : The oil droplets deform and orientate themselves in the capillary of the MECSM.

Stage VIII : Recovery of the dispersed phase takes place at the exit. The presence of water droplets within oil droplets essentially "weakens" the oil phase thus causing the fragmentation of the oil phase during capillary flow or at the capillary exit. Rod-to-disc transformation may be absent since the thickness of the disc is similar to the size of the water droplets within the oil phase. Fragmentation takes place during rod-to-disc transformation.

Stage IX : Recovery after more phase inversion. As a result:

i) Particle size is reduced, particle (oil phase) size distribution narrows.

ii) Conductivity is increased further due to the release of entrapped water ($\phi_w$ increases) and the exposure of more ionic surfactant to water takes place.

iii) Emulsion viscosity increases as a result of narrowing of particle size distribution. The viscosity of the dispersed phase also increases as entrapped water leaves the oil droplets. The emulsion viscosity increases as the liposomes are released into the continuous phase (water).

v) The emulsion becomes more shear thinning as a result of increasing emulsion conductivity.

If the above homogenisation process is repeated, further reductions in particle size and particle size distribution occur together with the corresponding increases in the conductivity and viscosity but at a much reduced rate.

This is because the number of oil particles which contain water reduces after each homogenisation stage.

The mechanism of flow induced phase inversion proposed by the present inventor explains qualitatively the observed behaviour of concentrated oil-in-water emulsions containing a blend of ionic and non-ionic surfactant. The important feature of the mechanism is the formation of thin semispherical to disc-like structures during the deceleration of flow following an acceleration stage. It is thus easier for such structures to encapsulate the oil phase which also contains small water droplets. Subsequent homogenisation stages result in the release of entrapped water and the disintegration of large oil drops.

**Characterisation of Experimental Conditions, Emulsion Composition and Emulsion Properties.**

The experimental conditions are characterised by the following parameters:

D = Capillary diameter
$E_m$ = Maximum extension rate
L = Capillary length
M = Number of passes through the MECSM
N = Number of mixer units
$S_m$ = Maximum shear rate in the MECSM
$\Phi$ = Capillary entry or exit angle

Emulsion composition is characterised by the following parameters:

$C_A$ = Anionic surfactant concentration in the oil phase
$C_C$ = Cationic surfactant concentration in the oil phase
$C_N$ = Non-ionic surfactant concentration in the oil phase
$C_T$ = Total surfactant concentration in the oil phase ($C_T=C_A+C_N$ or $C_T=C_C+C_N$)
$C_E$ = Electrolyte concentration in the emulsion
$C_P$ = Concentration of the hydrophobically modified water soluble polymer
$\Phi_o$ = Oil phase volume
$\Phi_w$ = Water phase volume
$\Phi_w^*$ = Critical phase volume at phase inversion

Emulsions are primarily characterised by their droplet size and its distribution. Average particle size used in the present disclosure is the volume average particle size ($a_{43}$) and the particle size distribution is characterised by the distribution span defined as

$$S = [a(90)-a(10)]/a(50)$$

where a(90), a(50) and a(10) are the diameters below which 90, 50 and 10% of the volume of the droplets lie.
In some cases the emulsion viscosity is also measured using a concentric cylinder viscometer. It is found that the emulsion viscosity is highly shear thinning and can be described by so called power-law fluid model;

$$\eta = \eta_o \gamma^{n-1}$$

where ($\eta$) is the emulsion viscosity, ($\eta_o$) and (n) are constants and ($\gamma$) is the shear rate (in 1/sec). ($\eta_o$) is equal to viscosity at a shear rate of 1 $sec^{-1}$ and (n) is known as the power-law index. Viscosity at shear rate of 1 $s^{-1}$ is denoted by ($\eta_1$).
The viscosity of the emulsion is also related to the viscosity of the continuous phase (essentially water), phase volume of the dispersed phase ($\phi_O$) and the particle size distribution which is reflected by the maximum packing fraction of the dispersed phase ($\phi_M$). If the maximum packing fraction is high, then the viscosity is reduced as a result of reduction in the power law index.
Emulsion conductivity (K) is also measured and these measurements are repeated over a period of time to asses the effect of aging.

**Characteristics of the o/w emulsions**

Flow induced phase inversion is suitable for producing stable, concentrated (50-72% dispersed phase volume) high viscosity ($10^5$ mPa s (cP) for the oil phase ) oil in water emulsions with low levels of surfactants. The emulsions of the invention are also characterised by a high shear thinning ability, high conductivity, a sub-micron particle size (0.6 µm) and narrow size distribution (span of 1.1).
The viscosity of these emulsions can be altered by changing the concentration of the ionic surfactant, by the addition of hydrophobically modified water soluble polymers and/or electrolyte or by decreasing the oil phase volume. Particle size in more concentrated emulsions is smaller compared with dilute emulsions produced at the same extension

rate. This is due to the generation of high stresses in the concentrated emulsion. The process of the invention is therefore suitable for highly viscous polymeric oils such as epoxide resins, silicone fluids and polymeric resins.

Oil in water emulsions of the invention and the process for preparing same will now be described in the context of the following examples. As before, it should be noted that the following description is provided to supplement the foregoing description and therefore ensure that the disclosure the present invention is complete rather than to limit the scope of the invention that is defined solely by the accompanying set of claims.

## EXAMPLES

### Example 1

The effect of temperature on critical water phase volume at phase inversion ($\phi_w$*).

The critical water phase volume at phase inversion is determined primarily by conductivity measurements. A number of factors affect ($\phi_w$*). Temperature of emulsification at the W/O stage should be chosen such that W/O emulsion is stable. Although one of the objectives of the present invention is to reduce the oil phase particle size in the O/W emulsion by generating high stresses through high viscosity, the ability of the mixing equipment to handle highly viscous materials should be taken into consideration. If the mixing is poor, dispersion of water is hindered thus a phase inversion can take place simply because of free water not being incorporated into oil.

**Experimental Conditions:** Batch Mixer, Rotor Speed=200 rpm;

**Oil Phase Composition:** $C_o$ = (100 - $C_T$) ; $C_N/C_A$= 2; $C_T$= 5, 10 or 15%

**Surfactants:** Non-ionic surfactant= Dobanol 91-2.5; Anionic surfactant= Aerosol OT.

**OIL**: Epikote 816

Table 4

| The effect of temperature on critical water phase volume at phase inversion at various total surfactant concentration levels. | | | |
|---|---|---|---|
| Temp (°C) | Critical Water Phase Volume ($\phi_W$*) | | |
| | $C_T$=15% | $C_T$=10% | $C_T$=5% |
| 5 | 32 | - | - |
| 15 | - | 33 | - |
| 20 | 40 | - | 28 |
| 25 | 41 | 35 | - |
| 30 | 59 | 42 | 30 |
| 35 | 61 | 50 | - |
| 40 | 59 | 53 | 46 |
| 45 | 57 | 52 | 48 |
| 50 | 49 | 46 | 46 |
| 60 | 32 | 43 | 39 |
| 70 | 30 | 35 | 36 |
| 80 | 29 | 30 | 35 |

### Example 2

The effect of mean HLB on critical water phase volume at phase inversion is evaluated using Epikote 816 as oil and various non-ionic and ionic surfactants.

**Experimental Conditions:** Batch mixer; T = 25°C; Impeller speed=200 rpm

**Oil phase composition:** $C_O$ = 85%; $C_N$ = 10%; $C_C$ = 5% or $C_A$ = 5%

**Table 5**

The effect of mean surfactant HLB on the critical water phase volume at phase inversion for Epikote 816 polymer resin.

| Non-ionic Surfactant | | Ionic Surfactant | | HLB of the blend | $\phi_w^*$ |
|---|---|---|---|---|---|
| wt% and Name | HLB | wt% and Name | HLB | (HLB) | (-) |
| 10% Dobanol 23-2 | 6.2 | 5% Arquad 2C-75 | 11.4 | 7.9 | 46 |
| 10% Dobanol 91-2.5 | 8.1 | 5% Arquad 2C-75 | 11.4 | 9.2 | 43 |
| 10% Dobanol 91-5 | 11.6 | 5% Arquad 2C-75 | 11.4 | 11.5 | 29 |
| 10% Dobanol 91-5 | 8.1 | - | - | 8.1 | 47 |
| | | | | | |
| 10% Cithrol 2DL | 5.9 | 5% Arquad 2C-75 | 11.4 | 7.7 | 44 |
| 10% Cithrol 2ML | 8.8 | 5% Arquad 2C-75 | 11.4 | 9.7 | 31 |
| 10% Cithrol 10ML | 15.8 | 5% Arquad 2C-75 | 11.4 | 14.3 | 25 |
| | | | | | |
| 10% Dobanol 91-2.5 | 8.1 | 5% Arquad 2HT | 9.7 | 8.6 | 50 |
| 10% Dobanol 91-2.5 | 8.1 | 5% Aerosol OT | - | - | 41 |

**Example 3**

The effect of ionic surfactant concentration on the critical water concentration at phase inversion is evaluated using Epikote 816 as the oil and Dobanol 91-2.5 and Aerosol OT as the surfactant. Total surfactant concentration $C_T$ = 10% is kept constant. Batch mixer is used at 100 rpm impeller rotation when T = 45°C.

Table 6

| The effect of ionic surfactant concentration in the surfactant mix on the critical water phase volume at phase inversion. | |
|---|---|
| wt% of anionic surfactant $100C_A/(C_A+C_N)$ | Critical water phase volume $\phi_W$* |
| 0 | 71 |
| 9.1 | 68 |
| 16.7 | 57 |
| 33.3 | 49 |
| 50 | 42 |
| 66.7 | 42 |

**Example 4**

The effect of deformation rate on the phase inversion is studied at constant water phase volume. Water is added (at a rate of 10 gram/min) to 400 gram oil phase containing non-ionic (Dobanol 91-2.5) and anionic (Aerosol OT) surfactants in a bach mixer (impeller speed = 200 rpm) at 45°C until the desired water phase volume is reached. The resulting W/O emulsion is mixed for a further 10 minutes before being transferred to the reservoir of the MECSM. The emulsion is forced through the mixer at various deformation rates characterised by the maximum extension rate $E_m$ at 45°C. The conductivity of the emerging emulsion is determined and if the conductivity is found to be above 200 µS/cm, the oil phase size distribution and the emulsion viscosity are determined.

**MECSM Characteristics:** N=4, D=0.5 mm, L/D=0, Φ=90°

**Emulsion Oil Phase Composition:** $C_o$=85% (Epikote 816) ; $C_T$=15%, $C_N/C_A$=2;

**Oil phase volume** $\phi_o$=66%

Table 7

| Max Extension Rate $E_M$ ($s^{-1}$) | Number of Passes Through MECSM (M) | Type of Emulsion | Conductivity K (µS/cm) | $a_{43}$ (µm) | Span S (-) |
|---|---|---|---|---|---|
| - | Batch Mixer | W/O | 2.2 | - | - |
| $4X10^4$ | 1 | W/O | 6.2 | - | - |
| $2X10^5$ | 1 | O/W | 390 | 1.99 | 4.0 |
| $2X10^5$ | 2 | O/W | 500 | 1.87 | 3.8 |
| $2X10^5$ | 3 | O/W | 620 | 1.57 | 1.9 |

**Example 5**

The experiments in the previous EXAMPLE(4) are repeated using high viscosity Epikote 828 as the polymeric resin to be emulsified. The new experimental conditions during phase inversion during flow through the MECSM are given below:

**MECSM Characteristics:** M = 1; D = 0.5 mm; L/D = 4; Φ = 180°

**Emulsion Oil Phase Composition:** $C_o$ = 90% (Epikote 828); $C_T$ = 10%; $C_N/C_A$= 5.

**Oil phase volume** $\phi_o$= 70%.

Table 8

| The effect of maximum extension rate ($E_M$) on the phase inversion and emulsion characteristics. | | | | | | |
|---|---|---|---|---|---|---|
| N | $E_M$ ($s^{-1}$) x $10^{-4}$ | η1 (pa.s) | n (-) | $a_{43}$ (μm) | S (-) | K (μS/cm) |
| Batch | - | - | - | - | - | 0.5 |
| 3 | 3.2 | - | - | - | - | 1.2 |
| 3 | 4.0 | - | - | - | - | 2.0 |
| 3 | 8.0 | - | - | - | - | 6.0 |
| 3 | 12 | - | - | - | - | 151 |
| 3 | 16 | 22.3 | 0.246 | 3.93 | 4.79 | 292 |
| 3 | 24 | 45.9 | 0.192 | 1.29 | 1.67 | 420 |
| 3 | 32 | 75.4 | 0.132 | 0.88 | 1.39 | 483 |
| 3 | 36 | 81.2 | 0.116 | 0.87 | 1.31 | 504 |
| 6 | 36 | 96.6 | 0.078 | 0.69 | 1.28 | 576 |

**Example 6**

The effects of processing conditions during phase inversion and addition of hydrophobically modified water soluble polymers (HMWSPs) on the emulsion characteristics are evaluated in this example. Oil phase consists of Epikote 816 ($C_o$ = 90%) and non-ionic surfactant (Dobanol-91-2.5) and anionic (Aerosol OT) surfactant mixture ($C_T$= 10% and $C_N/C_A$ = 2).

**Hydrophobically Modified Water Soluble Polymers (ex National Starch):**

P-1: Copolymer of sodium acrylate and lauryl methacrylate (25:1); $M_w$ = 3800 D, $M_n$ = 1500 D.

P-2: Copolymer of sodium acrylate and lauryl methacrylate (25:1); $M_w$ = 6200 D, $M_n$= 1000 D.

P-3: Copolymer of acrylamide and 2-sulfatoethyl methacrylate (25:1); $M_w$ = 4000 D; $M_n$= 1700 D.

**MECSM Characteristics:** T = 45°C; N = 4; D = 0.5 mm; L/D = 0; Φ = 90°.

**Table 9**

The effects of processing conditions and hydrophobically modified water soluble polymer concentration on emulsion characteristics and emulsion stability.

| Example | Age | Experimental Conditions | | Emulsion Composition | | Size Characteristics | | Viscosity Characteristics | | Conduct. | Notes |
|---|---|---|---|---|---|---|---|---|---|---|---|
| No. | (months) | $E_M$ ($sec^{-1}$) | M | $\phi_O$ (-) | HMWSP and $C_P/C_A$ | $a_{43}$ ($\mu m$) | S (-) | $\eta_1$ (Pa.s) | n (-) | K ($\mu S/cm$) | |
| 6.1 | 0 | $5x10^4$ | 1 | 55 | 0 | 2.97 | 3.99 | 0.496 | 0.495 | 400 | |
| 6.2 | 0 | $5x10^4$ | 2 | 55 | - (0) | 2.33 | 3.45 | 0.489 | 0.462 | 474 | |
| 6.3 | 0 | $5x10^4$ | 3 | 55 | - (0) | 2.16 | 3.05 | 0.587 | 0.391 | 485 | |
| 6.4 | 0 | $5x10^4$ | 3 | 55 | p1 (0.5) | 68.6 | 13 | 0.019 | 0.94 | - | unstable |
| 6.5 | 0 | $2x10^5$ | 1 | 60 | - (0) | 0.99 | 1.20 | 34.5 | 0.124 | 410 | |
| 6.6 | 0 | $2x10^5$ | 2 | 60 | - (0) | 0.97 | 1.25 | 36.0 | 0.092 | 415 | |
| 6.7 | 0 | $2x10^5$ | 3 | 60 | - (0) | 0.92 | 1.21 | 37.4 | 0.082 | 455 | |
| 6.8 | 0 | $2x10^5$ | 3 | 60 | P3 (0.1) | 0.97 | 1.22 | 8.9 | 0.241 | 598 | |
| 6.9 | 0 | $2x10^5$ | 3 | 60 | P3 (0.2) | 1.01 | 1.30 | 2.1 | 0.560 | 690 | |
| 6.10 | 0 | $2x10^5$ | 3 | 60 | P3 (0.4) | 1.81 | 1.95 | 0.61 | 0.593 | 810 | unstable |

| | | | | | | | | | | | |
|---|---|---|---|---|---|---|---|---|---|---|---|
| 6.11 | 5 | $2x10^5$ | 3 | 60 | - (0) | 0.93 | 1.23 | 9.0 | 0.536 | 195 | |
| 6.12 | 5 | $2x10^5$ | 3 | 60 | P3 (0.1) | 1.01 | 1.36 | - | - | 229 | |
| 6.13 | 5 | $2x10^5$ | 3 | 60 | P3 (0.2) | 1.41 | 1.75 | - | - | 340 | |
| 6.14 | 0 | $2x10^5$ | 1 | 70 | - (0) | 0.79 | 1.29 | 108 | 0.0907 | 544 | |
| 6.15 | 0 | $2x10^5$ | 2 | 70 | - (0) | 0.74 | 1.25 | 125 | 0.084 | 540 | |
| 6.16 | 0 | $2x10^5$ | 3 | 70 | - (0) | 0.68 | 1.18 | 210 | 0.040 | 542 | |
| 6.17 | 0 | $2x10^5$ | 3 | 70 | P1 (0.2) | 3.9 | 7.5 | 2.58 | 0.654 | - | unstable |
| 6.18 | 0 | $2x10^5$ | 3 | 70 | P2 (0.2) | 3.0 | 5.3 | 2.60 | 0.726 | - | unstable |
| 6.19 | 5 | $2x10^5$ | 3 | 70 | - (0) | 0.78 | 1.09 | - | - | 298 | |

**Example 7**

The effects of processing conditions and the effect of non-ionic/anionic surfactant concentration ratio are evaluated in this example. As in the previous example initially a W/O emulsion is formed which is subsequently phase inverted in the MECSM under the same experimental conditions as in Example 6 when the maximum extension rate in the MECSM is $E_m = 2x10^5 s^{-1}$.

**Oil phase composition:** $C_o$ = 90% (Epikote 816); $C_T$ = 10%.

**Surfactants:** Non-ionic (Dobanol 91-2.5) and Anionic (Aerosol OT).

**Oil phase volume:** $\phi_o$ = 60%.

**Table 10**

The effect of processing conditions and non-ionic/anionic surfactant concentration on the emulsion characteristics.

| Example No. | Age (months) | M (-) | $C_N/C_A$ | Size Characteristics | | Viscosity Characteristics | | Conductivity K (μS/cm) |
|---|---|---|---|---|---|---|---|---|
| | | | | $a_{43}$ (μm) | S (-) | $\eta_l$ (Pa.s) | n (-) | |
| 7.1 | 0 | 1 | 1 | 1.01 | 1.23 | 85.2 | 0.0294 | 488 |
| 7.2 | 0 | 2 | 1 | 0.98 | 1.24 | 81.3 | 0.0269 | 488 |
| 7.3 | 0 | 3 | 1 | 0.96 | 1.15 | 85.5 | 0.0092 | 502 |
| 7.4 | 5 | 3 | 1 | 0.92 | 1.20 | 38.2 | 0.227 | 204 |
| 7.5 | 0 | 1 | 2 | 0.99 | 1.20 | 34.5 | 0.124 | 410 |
| 7.6 | 0 | 2 | 2 | 0.97 | 1.25 | 36.0 | 0.096 | 415 |
| 7.7 | 0 | 3 | 2 | 0.92 | 1.21 | 37.4 | 0.082 | 455 |
| 7.8 | 5 | 3 | 2 | 0.93 | 1.23 | 9.5 | 0.536 | 195 |
| 7.9 | 0 | 1 | 5 | 1.05 | 1.36 | 2.71 | 0.312 | 390 |
| 7.10 | 0 | 2 | 5 | 1.03 | 1.26 | 2.57 | 0.310 | 406 |
| 7.11 | 0 | 3 | 5 | 1.01 | 1.24 | 2.58 | 0.337 | 420 |
| 7.12 | 5 | 3 | 5 | 1.01 | 1.24 | 2.00 | 0.480 | 168 |

**Example 8**

The effect of oil phase volume on the emulsion characteristics are evaluated. All the experimental conditions are as in Example 7 and M = 3. Oil phase consists of Epikote 816 and surfactant mixture (Dobanol 91-2.5 and Aerosol OT).
**Oil Phase Composition:** $C_o$ = 90%; $C_T$ = 10%; $C_N/C_A$ = 2.

Table 11

| Example No. | Oil Phase Volume $\phi_o$ (%) | Particle Size | | Viscosity | | Conductivity K (μS/cm) |
|---|---|---|---|---|---|---|
| | | $a_{43}$ (μm) | S (-) | $\eta_1$ (Pa.s) | n (-) | |
| 8.1 | 53 | 1.36 | 1.72 | 18.3 | 0.420 | 384 |
| 8.2 | 60 | 0.92 | 1.21 | 37.4 | 0.082 | 455 |
| 8.3 | 70 | 0.68 | 1.18 | 210 | 0.040 | 542 |

**Example 9**

The effect of electrolyte (NaCl) concentration ($C_E$) on the emulsion characteristics. Oil phase consists of Epikote 816 and surfactant mixture (Dobanol 91-2.5 and Aerosol OT).

**Oil Phase composition:** $C_o$ = 85%; $C_T$ = 15%;

**oil phase volume:** $\phi_o$ = 50%.

**Experimental Conditions during Phase Inversion:**
T = 45°C; N = 4; M = 2; D = 0.5 mm; L/D = 0; $E_m$= 2x$10^5$ s-1

Table 12

| The effect of electrolyte (NaCl) concentration on the emulsion characteristics. | | | | | | |
|---|---|---|---|---|---|---|
| Example No. | Age (months) | $C_N/C_A$ | $C_E$ (WT%) | $a_{43}$ (μm) | S (-) | Conduct. K (μS/cm) |
| 9.1 | 0 | 2 | 0 | 1.10 | 1.6 | 756 |
| 9.2 | 13 | 2 | 0 | 1.24 | 1.5 | 280 |
| 9.3 | 0 | 2 | 0.05 | 1.20 | 1.5 | 1270 |
| 9.4 | 13 | 2 | 0.05 | 1.42 | 1.7 | 328 |
| 9.5 | 0 | 5 | 0 | 1.06 | 1.8 | 625 |
| 9.6 | 13 | 5 | 0 | 1.18 | 1.7 | 295 |
| 9.7 | 0 | 5 | 0.01 | 1.16 | 1.5 | 683 |
| 9.8 | 0 | 5 | 0.02 | 0.91 | 1.3 | 898 |
| 9.9 | 0 | 5 | 0.05 | 0.91 | 1.5 | 1195 |
| 9.10 | 13 | 5 | 0.05 | 16.4 | 35.7 | 208 |

**Example 10**

The effect of processing conditions and emulsion composition on the emulsion characteristics in emulsions with a cationic emulsifier.

**Oil Phase Compositions:**

**C1:** 85% Epikote 816; 10% Cithrol 2DL; 5% Arquad 2C-75
**C2:** 85% Epikote 816; 10% Dobanol 23-2; 5% Arquad 2C-75

**C3:** 81% Epikote 816; 9% Dobanol 91-2.5; 4% Arquad 2C-75; 5% Isopropanol
**C4:** 85% Epikote 816; 10% Dobanol 91-2.5; 5% Arquad 2C-75

**Experimental Conditions during Phase Inversion:**
T = 25°C; N = 6; D = 0.5 mm; L/D = 0; $\Phi$ = 90°; $E_m = 2x10^5\ s^{-1}$

Table 13

| The effect of processing conditions and emulsion composition on the emulsion characteristics for cationic surfactant containing emulsions. | | | | | | | |
|---|---|---|---|---|---|---|---|
| Example No. | Age (months) | Composition | $\phi_o$ | M | $a_{43}$ (μm) | S (-) | K (μS/cm) |
| 10.1 | 0 | C1 | 53 | 3 | 6.72 | 3.2 | 444 |
| 10.2 | 0 | C2 | 56 | 2 | 3.03 | 2.9 | 636 |
| 10.3 | 0 | C3 | 67 | 3 | 1.18 | 2.6 | 550 |
| 10.4 | 3 | C3 | 67 | 3 | 1.51 | 2.2 | - |
| 10.5 | 0 | C4 | 67 | 1 | 1.47 | 6.2 | 558 |
| 10.6 | 0 | C4 | 67 | 2 | 1.28 | 2.5 | 593 |
| 10.7 | 3 | C4 | 67 | 2 | 1.40 | 2.0 | - |

## Example 11

The effect of superimposed ultrasound field on the emulsion characteristics is determined using the sonification cell shown in Figure 5. This sonification is constructed to accommodate an ultrasound source which operates at constant frequency of 20 kHz with a maximum power input of 150 W. The ultrasound source is manufactured by Dawe Instruments (Soniprobe Type 7532/B). The W/O emulsion from the reservoir of the MECSM is pumped into the sonification cell through a small capillary (D = 0.5 mm, L = 2 mm, $\Phi$ = 180°) and it is allowed to impinge on the surface of the sonic transducer. The diameter of the sonic transducer is 12 mm and the gap between the transducer and capillary surface is 1 mm (which could be changed by using different capillary spacers). The emulsion emerging from the capillary undergoes a combined extensional and shear flows with ultrasonic irradiation in the narrow gap. Upon leaving the irradiation zone, the emulsion flows in the annulus surrounding the transducer horn and leaves the flow cell. The temperature of the sonic cell is controlled by trace heating.

**Oil Phase Composition:** 90% Epikote 828; 10% surfactant mix (Dobanol 91-2.5 and Aerosol OT) $C_N/C_A$ = 3.

**Oil Phase Volume:** $\phi_o$ = 7%.

Table 14

| The effect of superimposed sonic field on emulsion characteristics. | | | | |
|---|---|---|---|---|
| Type of Flow | Sonic Power Rating (% of Maximum) | $a_{43}$ (μm) | S (-) | K (μS/cm) |
| Expansion Flow* | 0 | 2.74 | 4.85 | 300 |
| | 50 | 2.49 | 4.00 | 380 |
| | 100 | 1.51 | 2.67 | 445 |
| Contraction Flow* | 100 | 2.50 | 3.71 | 300 |

*: In the expansion flow, the fluid emerging from the capillary impinges on the tip of the sonic probe while in the contraction flow, fluid converges into the capillary after passing the sonic probe.

**Example 12**

Emulsification of alkyd resins (Ennelkyd 652) is carried out in a batch mixer (using a 12 cm diameter vessel fitted with 3 flat paddles of 7.6 cm diameter at a rotational speed of 150 rpm at 60°C). 400 grams of oil phase is placed in the batch mixing vessel and water is added at a rate of 10 grams per minute. Phase inversion takes place when the water phase volume reaches 30%. Mixing is continued for another 10 minutes and then the emulsion is subjected to homogenisation using the MECSM.

**Experimental Conditions during Homogenisation:**

T = 60°C; D = 0.5 mm; L/D = 0; $\Phi$ = 180°; N = 3; $E_m = 3.4\times10^5\ s^{-1}$.

Table 15

| The effect of processing conditions on the emulsion characteristics in alkyd emulsions. | | | | | |
|---|---|---|---|---|---|
| No. of passes M | Viscosity | | Particle Size | | Conduct. K (μS/cm) |
| | $\eta_1$ (Pa.s) | n (-) | $a_{43}$ (μm) | S (-) | |
| Batch | 84.2 | 0.467 | 5.13 | 1.76 | 106 |
| 1 | 245 | 0.190 | 1.43 | 1.48 | 285 |
| 2 | 355 | 0.141 | 0.98 | 1.14 | 384 |

The foregoing describes the invention and preferred forms thereof. However it is appreciated that one skilled in the art would readily appreciate that various modifications to the experimental procedure described are possible and therefore it should be understood that the detail of the materials, equipment and procedures that has been described has been presented solely for the purpose of providing a complete disclosure of the invention. Accordingly, the scope of the monopoly for which protection has been sought is defined solely by the following claims.

**Claims**

**1.** A stable oil in water emulsion containing:

a) a first surfactant comprising a nonionic surfactant having a HLB from 6 to 16,
b) a second surfactant comprising a cationic surfactant selected from dicocodimethyl ammonium chloride and hydrogenated ditallowdimethyl ammonium chloride, or the anionic surfactant sodium dioctyl sulphosuccinate, and
c) a viscous oil selected from epoxide polymers and alkyd resins.

**2.** A stable oil-in-water emulsion according to claim 1 wherein the first surfactant comprises an non-ionic surfactant having a HLB from 8 to 10.

**3.** An emulsion according to claim 1 or 2 wherein the first surfactant is a non-ionic surfactant selected from ethoxylated alcohols and esters.

**4.** An emulsion according to any preceding claim wherein the viscosity of the oil is at least $10^2$ mPa s (cP).

**5.** An emulsion according to claim 4 wherein the viscosity of the oil is between $10^2$ mPa s (cP) and $10^5$ mPa s (cP).

**6.** An emulsion according to claim 1 or 2 wherein the viscosity of the oil phase is between $10^2$ mPa s (cP) and $10^5$ mPa s (cP), the average particle size of the oil droplets is less than 1 μm (micron), the particle size distribution span of the oil droplets is less than 2 and the concentration of the dispersed phase volume is between 50% and 72%.

**7.** A process for preparing a stable, concentrated and highly viscous oil in water emulsion comprising preparing a water in oil emulsion comprising a nonionic surfactant having a HLB from 6 to 16, a cationic surfactant selected from dicocodimethyl ammonium chloride and hydrogenated ditallowdimethyl ammonium chloride or the anionic surfactant sodium dioctyl sulphosuccinat, and a viscous oil selected from epoxide polymers and alkyd resins, and subjecting the water in oil emulsion to extensional deformation so as to cause the water in oil emulsion to invert and thus become an oil in water emulsion.

**8.** A process according to claim 7 wherein water is added to a mixing vessel that contains the nonionic surfactant, the cationic or anionic surfactant, and viscous oil, and the resulting w/o emulsion is delivered to a multiple expansion contraction static mixer to induce a phase inversion.

**9.** A process according to claim 8 wherein said resulting w/o emulsion passes through a low extensional deformation in the form of a flow divider device prior to being delivered into said static mixer, to undergo a high extensional deformation rate.

**10.** A process according to claim 9, wherein the emulsion droplet size and the size distribution of the emulsion droplets is minimized by superimposing an external energy field, such as an ultrasound field, on the existing extensional deformation.

**Patentansprüche**

**1.** Stabile Öl-in-Wasser-Emulsion, enthaltend:

a) ein erstes oberflächenaktives Mittel, umfassend ein nichtionisches oberflächenaktives Mittel mit einem HLB-Wert von 6 bis 16,
b) ein zweites oberflächenaktives Mittel, umfassend ein kationisches oberflächenaktives Mittel, ausgewählt aus Dicocodimethylammoniumchlorid und hydriertem Ditallowdimethylammoniumchlorid oder dem anionischen oberflächenaktiven Mittel Natriumdioctylsulfosuccinat und
c) ein viskoses Öl, ausgewählt aus Epoxidpolymeren und Alkydharzen.

**2.** Stabile Öl-in-Wasser-Emulsion nach Anspruch 1, worin das erste oberflächenaktive Mittel ein nichtionisches oberflächenaktives Mittel mit einem HLB-Wert von 8 bis 10 umfaßt.

**3.** Emulsion nach Anspruch 1 oder 2, worin das erste oberflächenaktive Mittel ein nichtionisches oberflächenaktives Mittel, ausgewählt aus ethoxylierten Alkoholen und Estern, darstellt.

**4.** Emulsion nach mindestens einem der vorhergehenden Ansprüche, worin die Viskosität des Öls mindestens $10^2$ mPas (cP) beträgt.

**5.** Emulsion nach Anspruch 4, worin die Viskosität des Öls zwischen $10^2$ mPas (cP) und $10^5$ mPas (cP) liegt.

**6.** Emulsion nach Anspruch 1 oder 2, worin die Viskosität der Ölphase zwischen $10^2$ mPas (cP) und $10^5$ mPas (cP) liegt, die durchschnittliche Teilchengröße der Öltropfen weniger als 1 µm (Mikron) beträgt, der Teilchengrößenverteilungsbereich der Öltropfen weniger als 2 beträgt und die Konzentration des Volumens der dispergierten Phase zwischen 50% und 72% liegt.

**7.** Verfahren zur Herstellung einer stabilen, konzentrierten und hochviskosen Öl-in-Wasser-Emulsion, umfassend Herstellen einer Wasser-in-Öl-Emulsion, die aufweist: ein nichtionisches oberflächenaktives Mittel mit einem HLB-Wert von 6 bis 16, ein kationisches oberflächenaktives Mittel, ausgewählt aus Dicocodimethylammoniumchlorid und hydriertem Ditallowdimethylammoniumchlorid oder dem anionischen oberflächenaktiven Mittel Natriumdioctylsulfosuccinat und ein viskoses Öl, ausgewählt aus Epoxidpolymeren und Alkydharzen, und Unterziehen der Wasser-in-Öl-Emulsion einer Dehnungsdeformation zum Invertieren der Wasser-in-Öl-Emulsion, und somit zu einer Öl-in-Wasser-Emulsion zu gelangen.

**8.** Verfahren nach Anspruch 7, worin Wasser zu einem Mischungsgefäß zugegeben wird, welches das nichtionische oberflächenaktive Mittel, das kationische oder anionische oberflächenaktive Mittel und viskose Öl enthält, und wobei die resultierende w/o-Emulsion in einen Mehrfachexpansions-/Kontraktionsstatikmischer überführt wird, um die Phaseninversion einzuleiten.

**9.** Verfahren nach Anspruch 8, worin die resultierende w/o-Emulsion eine geringe Dehnungsdeformation in Form einer Flußverteilervorrichtung durchläuft, bevor sie in den statischen Mischer überführt wird, um einem hohen Dehnungsdeformationsgrad unterzogen zu werden.

**10.** Verfahren nach Anspruch 9, worin die Emulsionstropfengröße und die Größenverteilung der Emulsionstropfen

durch Überlagern eines externen Energiefelds, wie einem Ultraschallfeld, mit der vorliegenden Dehnungsdeformation minimiert wird.

**Revendications**

1. Emulsion huile dans eau stable, contenant :

   a) un premier agent tensio-actif comprenant un agent tensio-actif non ionique et ayant une valeur d'équilibre hydrophile-lipophile (HLB) de 6 à 16,
   b) un second agent tensio-actif comprenant un agent tensio-actif cationique choisi entre le chlorure de dicocodiméthylammonium et le chlorure de ditallowdiméthylammonium hydrogéné ou l'agent tensio-actif anionique consistant en dioctylsulfosuccinate de sodium, et
   c) une huile visqueuse choisie entre des polymères d'époxydes et des résines alkyde.

2. Emulsion huile-dans-eau stable suivant la revendication 1, dans laquelle le premier agent tensio-actif comprend un agent tensio-actif non ionique ayant une valeur de EHL de 8 à 10.

3. Emulsion suivant la revendication 1 ou 2, dans laquelle le premier agent tensio-actif est un agent tensio-actif non ionique choisi entre des alcools et esters éthoxylés.

4. Emulsion suivant l'une quelconque des revendications précédentes, dans laquelle la viscosité de l'huile est égale à au moins $10^2$ mPas (cp).

5. Emulsion suivant la revendication 4, dans laquelle la viscosité de l'huile est comprise dans l'intervalle de $10^2$ mPas (cp) à $10^5$ mPs (cp).

6. Emulsion suivant la revendication 1 ou 2, dans laquelle la viscosité de la phase huileuse est comprise dans l'intervalle de $10^2$ mPs (cp) à $10^5$ mPs (cp), le diamètre moyen de particules des gouttelettes d'huile est inférieur à 1 μm (micromètre), l'étendue de distribution des diamètres de particules des gouttelettes d'huile est inférieure à 2 et la concentration du volume de phase dispersée est comprise dans l'intervalle de 50 % à 72 %.

7. Procédé pour la préparation d'une huile stable, concentrée et extrêmement visqueuse en émulsion aqueuse, comprenant les étapes consistant à préparer une émulsion eau-dans-huile comprenant un agent tensio-actif non ionique ayant une valeur de EHL de 6 à 16, un agent tensio-actif cationique choisi entre le chlorure de dicocodiméthylammonium et le chlorure de ditallowdiméthylammonium hydrogéné, ou un agent tensio-actif anionique consistant en dioctylsulfosuccinate de sodium, et une huile visqueuse choisie entre des polymères d'époxydes et des résines alkyde, et à soumettre l'émulsion eau-dans-huile à une déformation par extension de manière à provoquer l'inversion de l'émulsion eau-dans-huile et, ainsi, sa transformation en une émulsion huile-dans-eau.

8. Procédé suivant la revendication 7, dans laquelle de l'eau est introduite dans un récipient de mélange qui contient l'agent tensio-actif non ionique, l'agent tensio-actif cationique ou anionique et l'huile visqueuse, et l'émulsion eau/huile résulatnte est délivrée à un mélangeur statique à expansion-contraction multiples pour induire une inversion de phase.

9. Procédé suivant la revendication 8, dans lequel l'émulsion eau/huile résultante passe à travers un dispositif de déformation à faible extension sous forme d'un dispositif diviseur d'écoulement avant d'être délivrée dans le mélangeur statique, pour subir un taux élevé de déformation par extension.

10. Procédé suivant la revendication 9, dans lequel le diamètre des gouttelettes de l'émulsion et la distribution des diamètres des gouttelettes de l'émulsion sont réduits au minimum par superposition d'un champ d'énergie extérieur, tel qu'un champ ultrasonique, sur la déformation par extension existante.

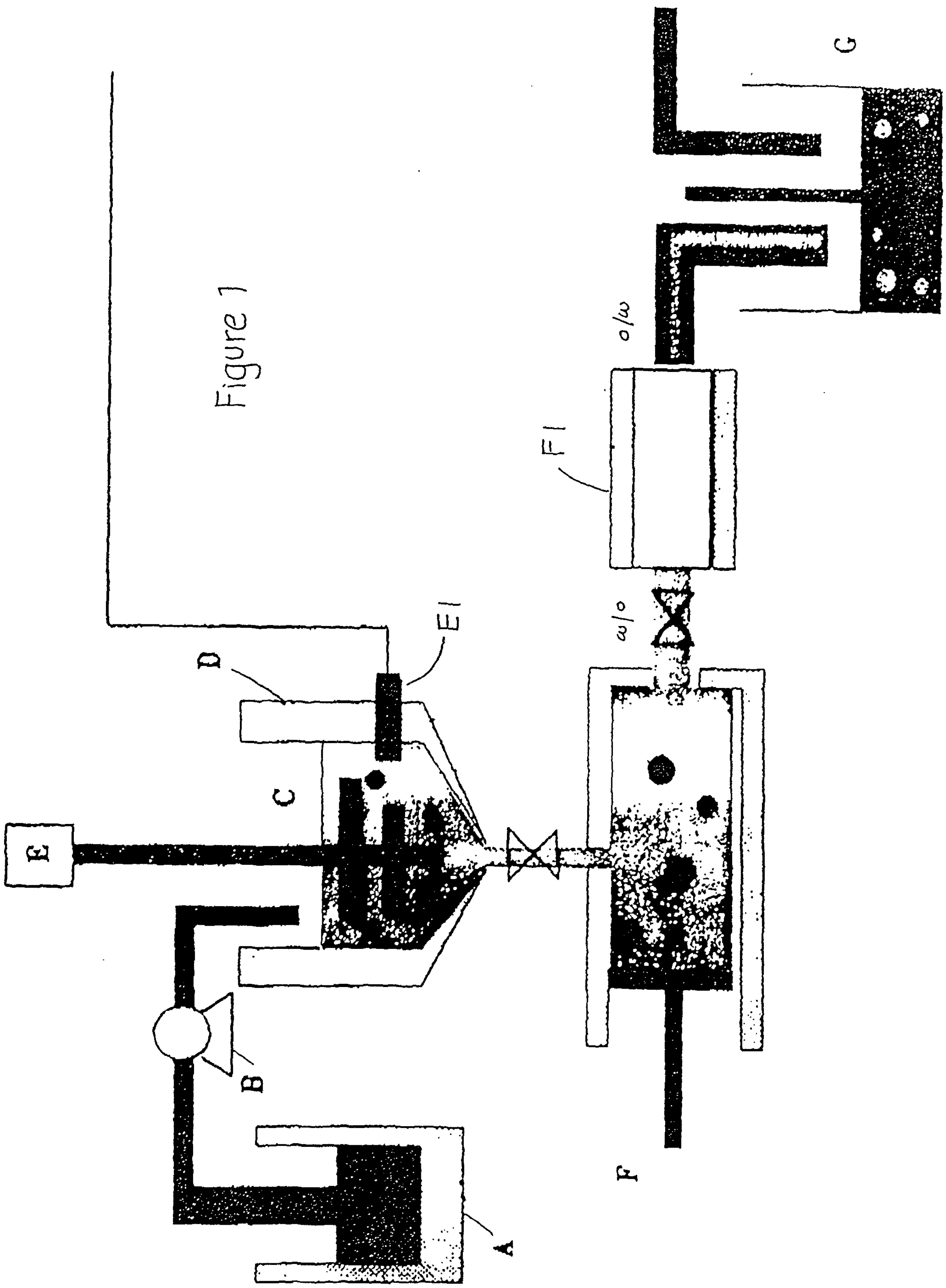


Figure 1

Figure 2

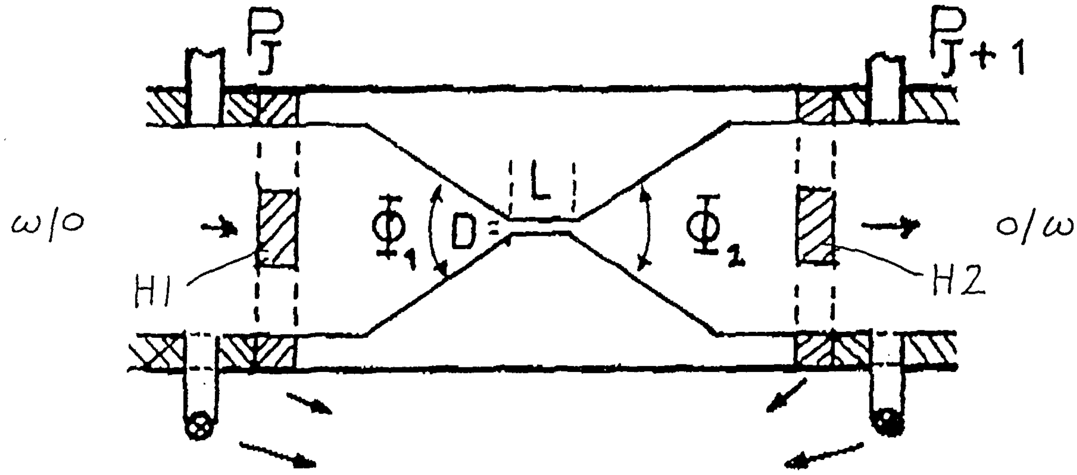


$$\dot{\Gamma}_m = 32\, Q_o / \pi D^3 \qquad \dot{\Sigma}_m = \frac{\dot{\Gamma}_m}{2} \sin(\Phi_i / 2)$$

$$\Delta P = \Delta P_{ent} + \Delta P_{cap} + \Delta P_{exit}$$

$$\Delta P_o = \Delta P_{ent} + \Delta P_{exit}$$

$$\Delta P_o = A\, \dot{\Sigma}_m^{\alpha} \qquad \alpha \doteq 1.8$$

Figure 3.

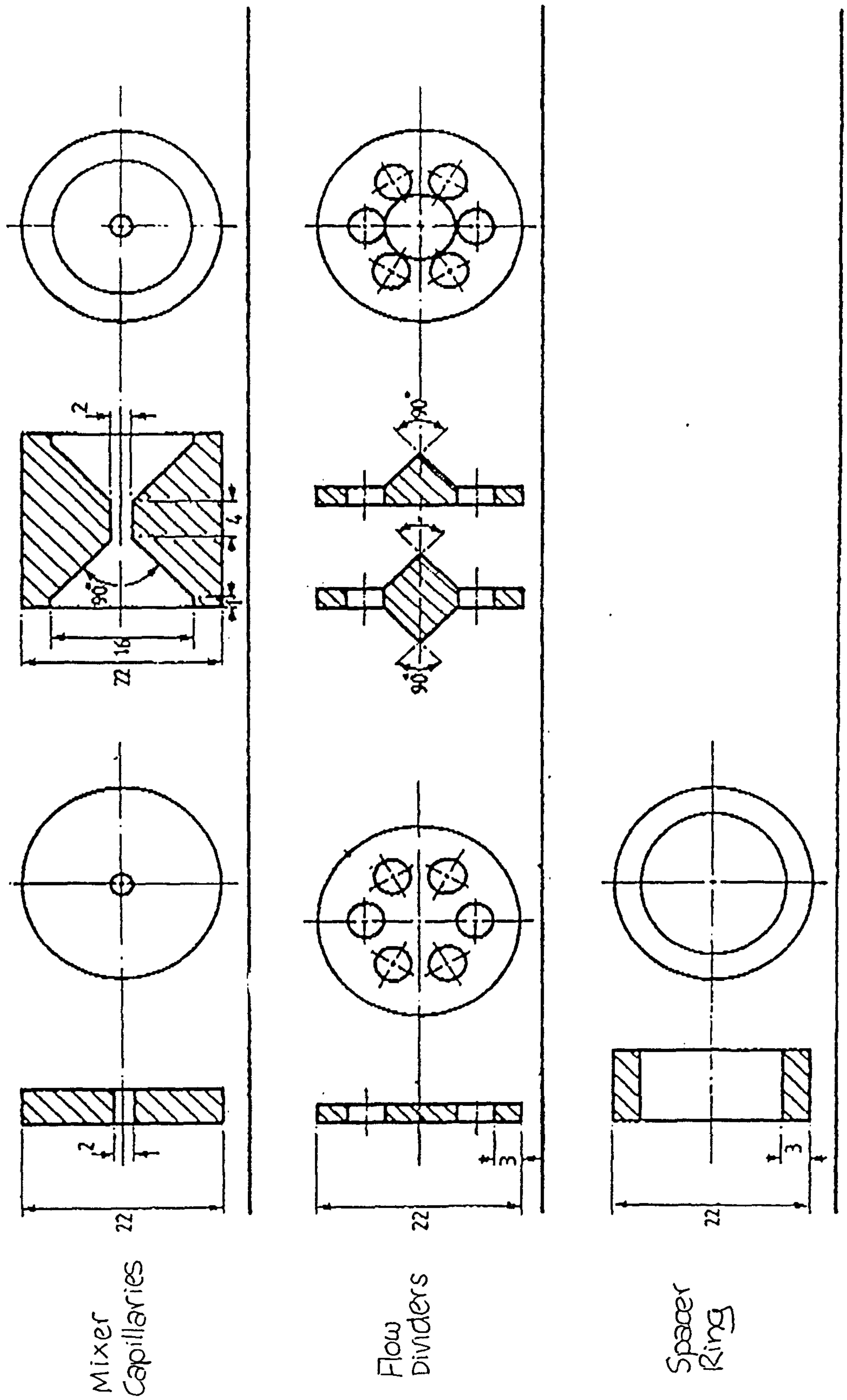

Figure 4.

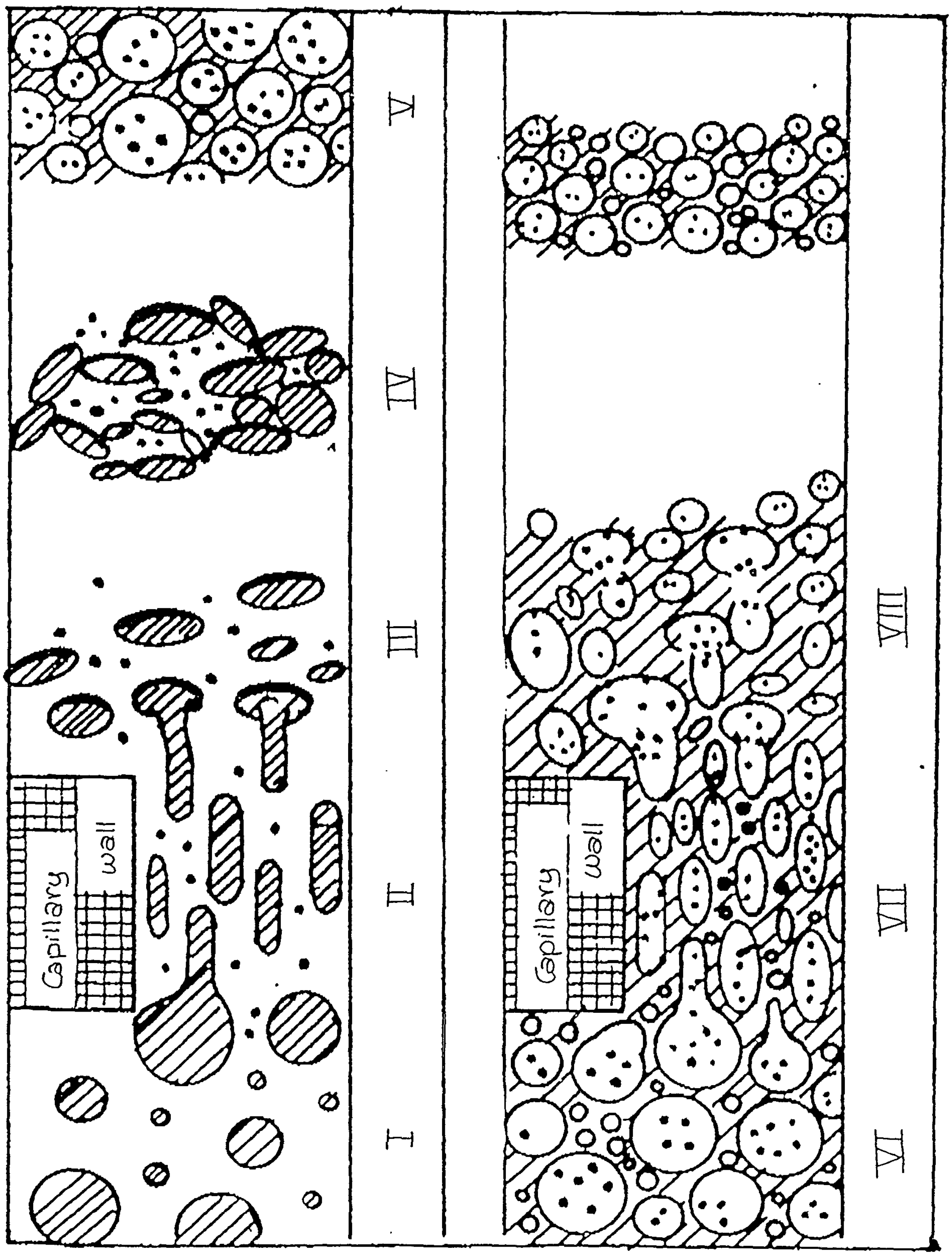

Figure 5.

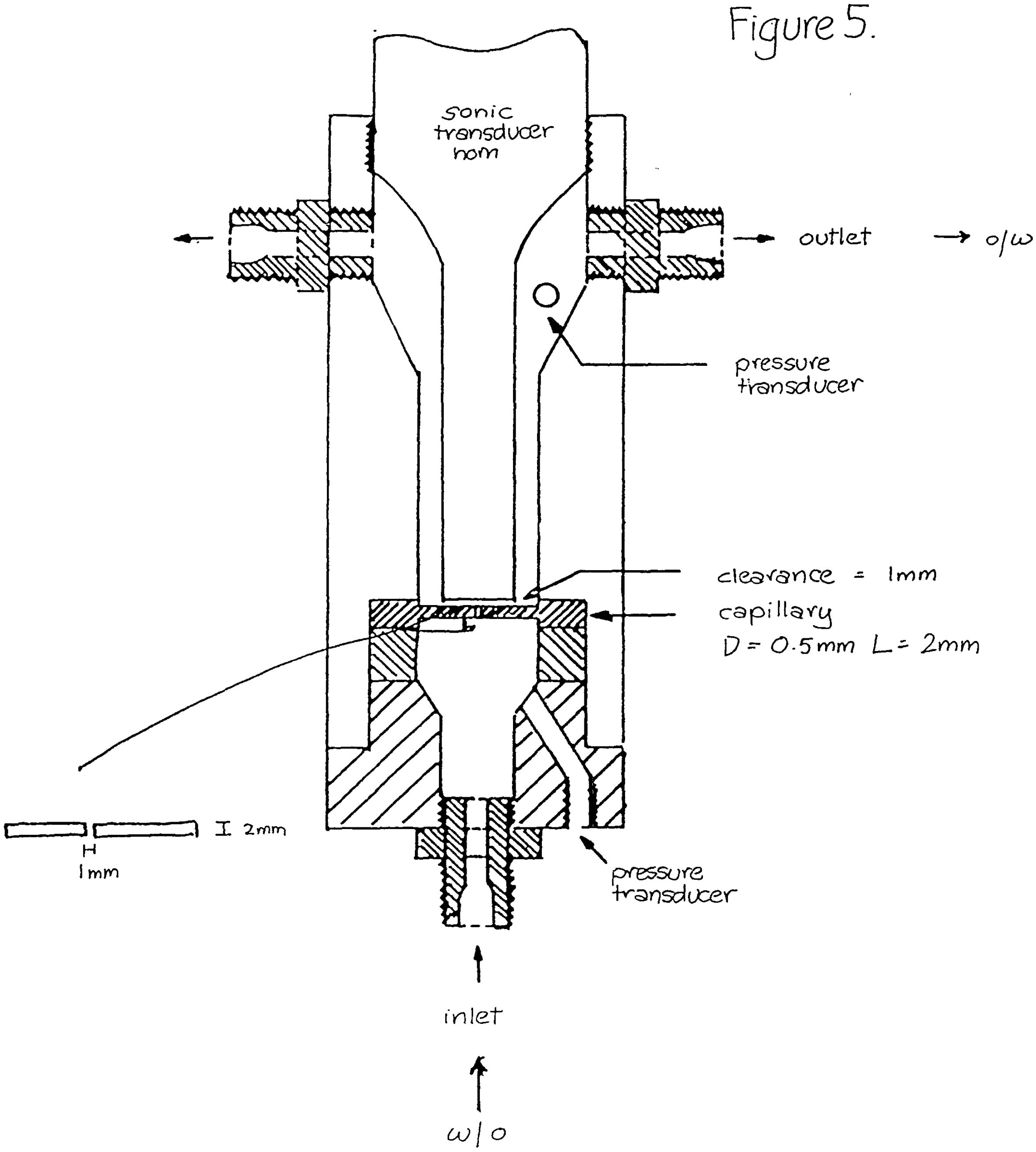
sonic
transducer
horn
outlet
→ o/w
pressure
transducer
clearance = 1mm
capillary
D = 0.5mm L = 2mm
2mm
1mm
pressure
transducer
inlet
w/o